# EUROPÄISCHE PATENTANMELDUNG

(11) **EP 4 283 845 A1**
(43) Veröffentlichungstag der Anmeldung: **29.11.2023**
(21) Anmeldenummer: 22175765.1
(22) Anmeldetag: 27.05.2022
(51) Int. Cl.: H02K 11/33, H02K 17/16, H02K 3/12, H02K 3/28, H02K 9/08, H02K 9/10, H02K 3/50, H02K 1/20, H02K 3/22, H02K 3/24, H02K 9/04

(54) **KÜHLUNGSKONZEPT EINER DYNAMOELEKTRISCHEN MASCHINE MIT WECHSELRICHTERMODULEN**

(71) Anmelder: Siemens Aktiengesellschaft, 80333 München (DE)
(72) Erfinder: Hösle, Markus, 91058 Erlangen (DE)
(74) Vertreter: Siemens Patent Attorneys

(57) **Zusammenfassung**

Die Erfindung betrifft eine dynamoelektrische rotatorische Maschine (1) mit einem Stator (2), der einen hohlzylindrischen magnetisch leitfähigen Körper, insbesondere ein axial geschichtetes Blechpaket (11) aufweist, das im Bereich seiner Innenmantelfläche Nuten (31) aufweist, die mit elektrischen Leitern (8) versehen sind,
wobei diese elektrischen Leiter (8) auf einer Stirnseite des magnetisch leitfähigen Körpers des Stators durch zumindest einen Kurzschlussring (9) elektrisch kontaktiert sind,
wobei diese elektrischen Leiter (8) auf der anderen Stirnseite des magnetisch leitfähigen Körpers mit einer Vielzahl von Wechselrichtermodulen (6) zur Ansteuerung der jeweiligen elektrischen Leiter (8) elektrisch kontaktiert sind,
einem von dem Stator (2) durch einen Luftspalt (23) beabstandeten Rotor (3), der als Kurzschlussläufer ausgebildet ist und an seinen Stirnseiten Kurzschlussringe (24) aufweist, wobei die Leiter (8) und/oder die Wechselrichtermodule (6) und/oder der Rotor (3) und/oder der Kurzschlussring (9) des Stators (2) jeweils zumindest abschnittsweise mittels eines gasförmigen Mediums, insbesondere Luft kühlbar sind.

## Beschreibung

Die Erfindung betrifft eine dynamoelektrische Maschine mit Wechselrichtermodulen und ein Verfahren zur Kühlung einer dynamoelektrischen Maschine mit Wechselrichtermodulen.

Wicklungssysteme von Statoren dynamoelektrischer Maschinen sind aus Wickeldrähten oder Leiterstäben aufgebaut, die in Nuten eines magnetisch leitfähigen Körpers des Stators angeordnet sind.

Besteht das Wicklungssystem nicht aus einer verteilten dreiphasigen Wicklung mittels Kabel oder Drähten, sondern aus einer hohen Anzahl von Leiterstäben, ist aufgrund der vergleichsweise geringen Induktivität jedoch eine hohe Stromstärke erforderlich. Diese hohe Stromstärke benötigt aufgrund des geringen ohmschen Widerstandes der Leiterstäbe lediglich eine verhältnismäßig geringe Spannung (<100V). Diese geringe Spannung ermöglicht es, Wechselrichtermodule, mit denen die Leiterstäbe angesteuert werden, in relativ geringem Abstand zueinander an der dynamoelektrischen Maschine anzuordnen.

Diese Leiterstäbe werden auf einer Stirnseite des magnetisch leitfähigen Körpers des Stators über einen Kurzschlussring miteinander verbunden, und auf der anderen Stirnseite des magnetisch leitfähigen Körpers des Stators durch jeweils zugeordnete Wechselrichtermodule gespeist, wie dies beispielsweise aus der DE 10 2005 032 965 A1 bekannt ist.

Diese aus dem Wicklungskonzept resultierenden, geringen Spannungen ermöglichen einen kompakten Aufbau des gesamten Antriebs, also der dynamoelektrischen Maschine und der Leistungselektronik.

Aufgrund des kompakten Aufbaus und den vergleichsweise hohen Strömen entstehen in der Leistungselektronik und in den Leiterstäben, als auch deren Übergängen vergleichsweise hohe Verluste.

Bisher werden bei Antrieben im höheren Leistungsbereich (> 0,5 MW) grundsätzlich Gas- (insbesondere Luft-)kühlungen oder Flüssigkeits- (insbesondere Wasser-)kühlungen auf die jeweiligen Bedürfnisse der dynamoelektrischen Maschine und getrennt davon auch für den abseits aufgestellten Umrichter konzipiert.

Ausgehend davon liegt der Erfindung die Aufgabe zugrunde, eine effiziente und einfache Kühlung für eine derartige dynamoelektrische Maschine, insbesondere für höhere Leistungsklassen (Nennleistung > 0,5 MW) zu schaffen. Des Weiteren soll ein effizientes Verfahren zur Kühlung einer derartigen dynamoelektrischen Maschine bereitgestellt werden.

Die Lösung der gestellten Aufgabe gelingt durch eine dynamoelektrische rotatorische Maschine mit
- einem Stator, der einen hohlzylindrischen magnetisch leitfähigen Körper, insbesondere ein axial geschichtetes Blechpaket aufweist, das im Bereich seiner Innenmantelfläche Nuten aufweist, die mit elektrischen Leitern versehen sind,
- wobei diese elektrischen Leiter auf einer Stirnseite des magnetisch leitfähigen Körpers des Stators durch zumindest einen Kurzschlussring elektrisch kontaktiert sind,
- wobei diese elektrischen Leiter auf der anderen Stirnseite des magnetisch leitfähigen Körpers mit einer Vielzahl von Wechselrichtermodulen zur Ansteuerung der jeweiligen elektrischen Leiter elektrisch kontaktiert sind,
- einem von dem Stator durch einen Luftspalt beabstandeten Rotor, der als Kurzschlussläufer ausgebildet ist und an seinen Stirnseiten Kurzschlussringe aufweist,
- wobei die Leiter und/oder die Wechselrichtermodule und/oder der Rotor und/oder der Kurzschlussring des Stators jeweils zumindest abschnittsweise mittels eines gasförmigen Mediums, insbesondere Luft, kühlbar sind.

Der in einer Nut angeordnete elektrische Leiter kann massiv, als hohler Leiterstab, oder als aus Teilleitern aufgebauter Leiterstab ausgeführt sein.

Eine Stabkühlung der hohlen oder massiven Leiterstäbe in Stator und/oder Rotor erfolgt durch Luft, die die Leiterstäbe zumindest abschnittsweise um- bzw. durchströmt. Die Leiterstäbe in der Nut können auch jeweils in parallele Teilleiter unterteilt sein, die - über die axiale Länge einer Nut des Stators betrachtet - gerade (positionsgetreu) oder verdrillt (positionswechselnd) innerhalb dieser Nut verlaufen.

Die dynamoelektrische rotatorische Maschine weist einen Kurzschlussring des Stators und/oder Kurzschlussringe des Rotors aus axial voneinander beabstandeten Einzelringen und/oder aus umfänglich zusammengefügten Ringsegmenten auf. Dies vereinfacht die Herstellung und verbessert die Kühlung der Kurzschlussringe und/oder der dort befindlichen Abschnitte eines Leiters.

Zur Verbesserung der Kühlwirkung weisen die Kurzschlussringe des Rotors Lüfterelemente auf, die der Erzeugung eines, insbesondere im Wesentlichen, radialen Kühlluftstroms dienen. Dieser Kühlluftstrom dient u.a. der Kühlung des Kurzschlussringes des Stators und/oder der Kühlung der Wechselrichtermodule der dynamoelektrischen rotatorischen Maschine.

Diese Lüfterelemente sind stirnseitig an den Kurzschlussringen des Rotors und/oder zwischen den axial unterteilten Einzelringen eines Kurzschlussringes des Rotors angeordnet. Eine axiale Beanstandung von Einzelscheiben des Kurzschlussringes des Stators und/oder der Wechselrichtermodule verbessert dabei die Kühlwirkung dieser Komponenten. Kurzschlussringe können selbstverständlich auch einstückig ausgeführt sein.

Der Kurzschlussring könnte durch beabstandete Einzelbleche oder axial zusammengesetzte Einzelbleche oder einen massiven Ring gebildet werden, der vorzugsweise durch den Hochdruckvorgang mit den Leiterstäben kontaktiert wird, mit dem auch die Hohlleiter in dem Ständer-Blechpaket fixiert werden.

In einer weiteren Ausführung kann ergänzend oder eigenständig die Funktion von Eigenlüftern durch den oder die Kurzschlussringe des Rotors übernommen werden, indem schaufelähnlich bzw. lüfterähnliche Elemente am Kurschlussring ausgebildet sind. Bei einem aus axial beabstandeten Scheiben aufgebauten Kurzschlussring des Rotors sind schaufelähnlich bzw. lüfterähnliche Elemente axial zwischen den einzelnen Scheiben angeordnet.

Die dynamoelektrische rotatorische Maschine weist im Stator und Rotor einen magnetisch leitfähigen Körper, insbesondere axial geschichtete Blechpakete auf, wobei in Nuten des Stators und Rotors die Leiter in Nuten positioniert sind. Die Blechpakete weisen in im Wesentlichen optional axial verlaufende Kühlkanäle auf und/oder axial unterteilt und voneinander axial beabstandet Teilblechpakete von Stator und/oder Rotor auf. Die magnetisch leitfähigen Körper von Stator und/oder Rotor, insbesondere deren Blechpakete werden somit durch axiale und radiale Luftströmungen kühlbar.

Bei einem Rotorblechpaket aus axial beabstandeten Teilblechpaketen sind die zwischen den Teilblechpaketen angeordneten Abstandshalter vorzugsweise auch als schaufel- oder lüfterähnliche Elemente ausgebildet, um bei Drehung des Rotors Luft auch direkt - sofern vorhanden - in die radial darüber liegenden Schlitze zwischen die Teilblechpakete des Stators zu fördern.

Eine Eigenlüfterfunktion kann somit durch eigens auf der Welle drehfest positionierte Lüfter und Lüfterflügel, und/oder durch schaufel- oder lüfterähnliche Elemente an und/oder in den Kurzschlussringen des Rotors und/oder schaufel- oder lüfterähnliche Elemente zwischen den Teilblechpaketen des Rotors generiert werden, sobald sich der Rotor dreht.

Eigenständige Eigenlüfter sind mit der den Rotor tragenden Welle drehfest verbunden und sind radial innerhalb der Kurzschlussringe von Stator und/oder Rotor angeordnet.

Die Kühlung des Antriebs bzw. der dynamoelektrischen Maschine mit den Wechselrichtermodulen kann insgesamt offen sein (Wärmetausch mit der Umgebungsluft, z.B. über Luftschlitze im Gehäuse der Maschine), oder als geschlossener Innenkühlkreislauf (Primärkreislauf) innerhalb des Maschinengehäuses mit Sekundärkühleinrichtung zur Kühlung des Luftstromes des Primärkreislaufes ausgebildet werden.

Die jeweiligen erforderlichen Luftströme (bei offenen und geschlossenen Kreisläufen) bzw. Förderung der Kühlmedien kann durch Eigenlüfter und/oder Fremdlüfter erfolgen.

Als Primärkreislauf wird unabhängig von ein- oder zweiseitiger Belüftung (Z- oder X-Belüftung) innerhalb der dynamoelektrischen Maschine ein gasförmiger Kühlstrom, insbesondere ein Luftstrom bzw. eine Luftstromverteilung, bezeichnet, der Komponenten der Maschine, u.a. wie Wechselrichtermodule, Kurzschlussringe von Stator und/oder Rotor, magnetisch leitfähige Körper von Stator und/oder Rotor, (z.B. Blechpakete oder Teilblechpakete), Leiter, zumindest Gehäuseabschnitte, Lagerschilde und Lager anströmt und/oder umströmt und/oder durchströmt und als geschlossener Kreislauf (Innenkühlkreislauf) ausgeführt ist, der keinen strömungsmäßigen Kontakt nach außen hat.

Der Luftstrom des Primärkreislaufes wird durch einen oder mehrere Eigenlüfter und/oder Fremdlüfter drückend oder saugend innerhalb des Gehäuses der dynamoelektrischen Maschine generiert.

Als Sekundärkreislauf wird ein Kühlstrom, Flüssigkeitskühlstrom (z.B. auf der Basis von Wasser) oder ein gasförmiger Kühlstrom (z.B. auf der Basis von Luft) im Aufsatzkühler bezeichnet, der wärmetechnisch mit dem Kühlstrom des Primärkreislaufes gekoppelt ist, ihn also rückkühlen kann, wobei der Kühlstrom bzw. Kühlstromverteilung, insbesondere Luft des Sekundärkreislaufes durch Eigen- und/oder Fremdlüfter oder dementsprechende Pumpen drückend oder saugend generiert wird.

Vorzugsweise ist der Sekundärkreislauf offen ausgeführt, d.h. er wird mit Umgebungsluft betrieben, die aus der Umgebung angesaugt durch das Medium des Primärkreislaufs erwärmt und anschließend an die Umgebung wieder abgegeben wird. Damit kann eine dynamoelektrische Maschine mit einem derartigen Aufsatzkühler ausgestattet, an nahezu beliebigen Orten aufgestellt werden. Es sind ggf. vor den Sekundärkreislauf Filtermatten oder Luftfilter für stark verschmutzte Luft vorzusehen.

Dabei kann sich jeder Luftstrom sowohl des Primärkreislaufes als auch des Sekundärkreislaufes zumindest abschnittsweise innerhalb seines Strömungsverlaufs in parallele Strömungspfade aufteilen, insbesondere während des Wärmeaustausches zwischen Primärkreislauf und Sekundärkreislauf. Dies geschieht vorteilhafterweise durch Leitvorrichtungen in der dynamoelektrischen Maschine und/oder in einem als Aufsatzkühler ausgebildeten Sekundärkreislauf, um die Kühlwirkung der Strömung von Primärkreislauf und/oder Sekundärkreislauf zu optimieren.

Der Innenkühlkreislauf bzw. Primärkreislauf der dynamoelektrischen rotatorischen Maschine kann als Z- oder X-Belüftung ausgelegt sein.

Als einseitige Belüftung (Z-Belüftung) des Innenkühlkreislaufs wird die Belüftung der dynamoelektrischen Maschinen bezeichnet, bei der ein Luftstrom (Primärkreislauf) auf einer Seite der dynamoelektrischen Maschine in einen Wickelkopfraum eingespeist wird und danach über verschiedene parallele und/oder serielle Strömungskanäle - Wickelkopf, Rücken des Blechpakets des Stators, radiale Kühlkanäle, Luftspalt, etc. - zu dem anderen Wickelkopfraum gelangt. Von dort gelangt die erwärmte Luft des Primärkreislaufes über einen oder mehrere Lüfter - Eigenlüfter oder Fremdlüfter - in den Aufsatzkühler zur Rückkühlung.

Die Luft des Primärkreislaufes wird somit über einen Wickelkopfraum in das Gehäuse der dynamoelektrischen Maschine geführt und dort über den Wickelkopf und die Blechpakete und/oder den Luftspalt in den anderen Wickelkopfraum geführt. Von dort wird der nun erwärmte Kühlluftstrom über den Aufsatzkühler, mittels des Sekundärkreislaufes rückgekühlt.

Als zweiseitige Belüftung (X-Belüftung) des Innenkühlkreislaufs wird die Belüftung der dynamoelektrischen Maschine bezeichnet, bei der ein Luftstrom (Primärkreislauf) auf beiden Seiten der dynamoelektrischen Maschine in den Wickelkopfraum eingespeist wird und danach über verschiedene parallele und/oder serielle Strömungskanäle - u.a. Wickelkopf, Rücken des Blechpakets des Stators, radiale Kühlkanäle, Luftspalt, etc. - im Wesentlichen mittig am Rücken des Statorblechpakets in den Aufsatzkühler gelangt. Die erwärmte Luft des Primärkreislaufes wird durch einen oder mehrere Lüfter - Eigenlüfter oder Fremdlüfter - in den Aufsatzkühler zur Rückkühlung gefördert. Dementsprechende, insbesondere stellbare Blendenelemente verbessern den Strömungsverlauf des Primärkreislaufes.

Der Sekundärkreislauf insbesondere der Aufsatzkühler der dynamoelektrischen rotatorischen Maschine ist als Röhrenkühler oder Plattenkühler ausgeführt, dessen Kühlmedium Luft oder Wasser ist. Derartige geschlossene Kühlkreisläufe sind am besten mit folgenden Aufsatzkühlern realisierbar: (Luft-Luft-Kühlaggregate via Röhren- oder Plattenkühler; oder Luft-Flüssigkeits-Kühlaggregate via Mantel- oder Aufsatzkühler). Verstellbare Leitvorrichtungen, wie Düsenelemente oder Blendeelemente, führen und/oder verzweigen den Luftstrom von Primärkreislauf und/oder Sekundärkreislauf.

Die Wechselrichtermodule werden durch radiale und/oder axiale Luftströmung gekühlt und bei besonders hoher Wärmelast gezielt angeströmt.

Ergänzend können die einzelnen Wechselrichtermodule auch Teil eines separaten Flüssigkeitskreislaufes sein.

Die Kurzschlussringe von Stator und/oder Rotor werden mittels radialer und/oder auch axialer Luftströmungen gezielt an-, um-, oder durchströmt.

Die Anzahl der elektrischen Kontaktstellen, insbesondere zwischen den Wechselrichtermodulen und deren Leiterstäben, sollte reduziert und niederohmig ausgestaltet sein, um auch Übergangswiderstände zu vermeiden, die ebenfalls zur Aufheizung beitragen. Dazu eignen sich folgende Verfahren wie Cold-spray, Hochdruckfügen, Schweißen und Löten.

Die axiale Schichtung nicht nur der Kurzschlussringe von Rotor und Stator, sondern auch des magnetisch leitfähigen Körpers von Stator und Rotor ist außerdem auch für die Vermeidung von Wirbelströmen vorteilhaft.

Die Kühlung von Leiterstäben (unabhängig von der Ausführung hohl, massiv, Teilleiter, verwunden), der Kurzschlussringe von Stator und Rotor (einstückig oder axial unterteilt), als auch die Wechselrichtermodule (axial unterteilt) und/oder der Blechpakete von Stator und Rotor ermöglichen die Entwärmung des Antriebs und können somit auch den Wärmefluss von der Maschine in die Wechselrichtermodule - zumindest teilweise - verhindern.

Die Erfindung sowie weitere vorteilhafte Ausgestaltungen der Erfindung werden anhand prinzipiell dargestellter Ausführungsbeispiele näher erläutert, darin zeigen:
- FIG 1: perspektivische Darstellung einer dynamoelektrischen Maschine,
- FIG 2: Längsschnitt einer prinzipiellen Darstellung einer dynamoelektrischen Maschine,
- FIG 3 bis 6: Längsschnitte einer Stirnseite der dynamoelektrischen Maschine,
- FIG 7: Ausschnitt der Blechpakete von Stator und Rotor,
- FIG 8: Längsschnitt einer prinzipiellen Darstellung einer dynamoelektrischen Maschine mit Aufsatzkühler.

Es sei angemerkt, dass sich Begriffe wie "axial", "radial", "tangential" etc. auf die in der jeweiligen Figur bzw. im jeweils beschriebenen Beispiel zum Einsatz kommende Achse 5 beziehen. Mit anderen Worten beziehen sich die Richtungen axial, radial, tangential stets auf eine Achse 5 des Rotors 3 und damit auf die entsprechende Symmetrieachse des Stators 2. Dabei beschreibt "axial" eine Richtung parallel zur Achse 5, "radial" beschreibt eine Richtung orthogonal zur Achse 5, auf diese zu oder auch von ihr weg, und "tangential" ist eine Richtung, die in konstantem radialem Abstand zur Achse 5 und bei konstanter Axialposition kreisförmig um die Achse 5 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 3 und Stator 2, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente zumindest abschnittsweise idealerweise lückenlos bzw. vollflächig berühren. Konsequenterweise ist also dort im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die beschriebenen Ausführungen der Kühlung eines derartigen Antriebs bzw. einer dynamoelektrischen Maschine 1 können beliebig kombiniert werden. Ebenso sind auch Einzelmerkmale der jeweiligen Ausführungen mit Merkmalen anderer Ausführungen kombinierbar, ohne das Wesen der Erfindung zu verlassen.

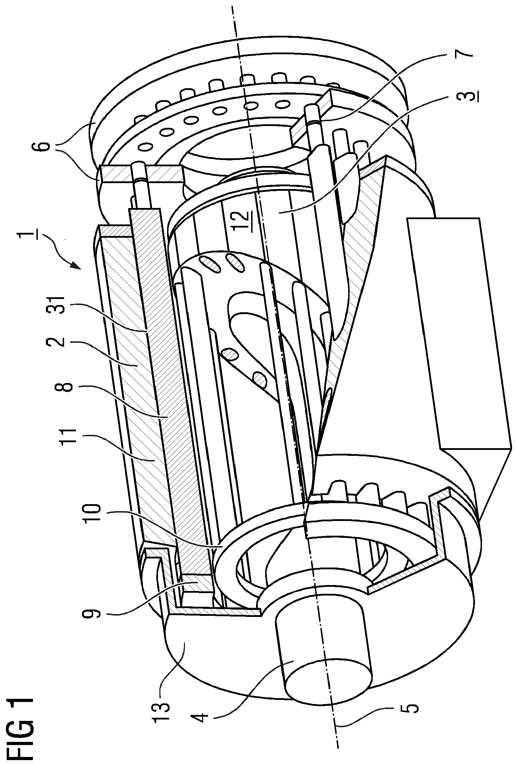

FIG 1 zeigt in perspektivischer Darstellung den prinzipiellen Aufbau einer erfindungsgemäßen dynamoelektrischen Maschine 1. Auf der einen Stirnseite des magnetischen leitfähigen Körpers eines Stators 2 sind Wechselrichtermodule 6 angeordnet. Auf der anderen Stirnseite des magnetischen leitfähigen Körpers des Stators 2 befindet sich ein Kurzschlussring 9 des Stators 2, der die einzelnen, in Nuten 31 angeordneten Leiterstäbe 8 des Stators 2, elektrisch kontaktiert und kurzschließt. Der magnetisch leitfähigen Körper des Stators 2 ist als axial geschichtetes Blechpaket 11 aufgebaut. Radial durch einen Luftspalt 23 vom Stator 2 beabstandet ist ein Rotor 3 angeordnet. Dieser Rotor 3 ist drehfest mit einer um eine Achse 5 drehbaren Welle 4 verbunden. Der Rotor 3 ist in diesem Fall mit einem Kurzschlusskäfig 10 ausgeführt. Der magnetisch leitfähigen Körper des Rotors 3 ist als axial geschichtetes Blechpaket 12 aufgebaut.

Die Wechselrichtermodule 6 sind ebenfalls, sofern mehrere Wechselrichtermodule 6 pro Leiterstab vorhanden sind, axial hintereinander geschichtet angeordnet. Über Anschlusselemente 7, die dementsprechend erforderliche Stromstärken (> 1000A) als Betriebsstrom führen können, sind die Wechselrichtermodule 6 mit ihren jeweiligen Leitern, insbesondere Leiterstäben 8, elektrisch, insbesondere niederohmig kontaktiert.

Die Welle 4 ist über Lager 35 und Lagerschilde 36 an einem Gehäuse 28 und/oder einer Abdeckung 13 der dynamoelektrischen Maschine 1 abgestützt.

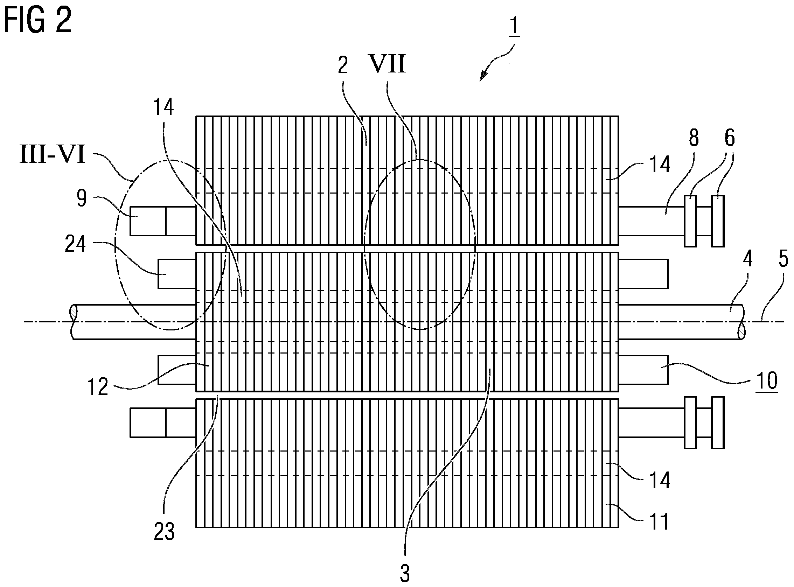

FIG 2 zeigt im Längsschnitt eine prinzipiell dargestellte dynamoelektrische Maschine 1, wobei u.a. ergänzend zu FIG 1, die im weiteren näher beschriebenen Abschnitte dieser dynamoelektrischen Maschine 1 aufgezeigt sind. In dieser Darstellung wird ergänzend zur Ausführung nach FIG 1 gezeigt, dass im Blechpaket 11 des Stators 2 auch axial verlaufende Kühlkanäle 14 vorgesehen sein können, wobei auch im Rotor 3 in dessen Blechpaket 12 radial innerhalb des Kurzschlusskäfigs 10 ebenfalls axial verlaufende Kühlkanäle 14 vorgesehen sein können.

Auf der einen Stirnseite des Stators 2 sind an den aus dieser Stirnseite axial ragenden Enden der Leiterstäbe 8 die jeweiligen Wechselrichtermodule 6 elektrisch kontaktiert.

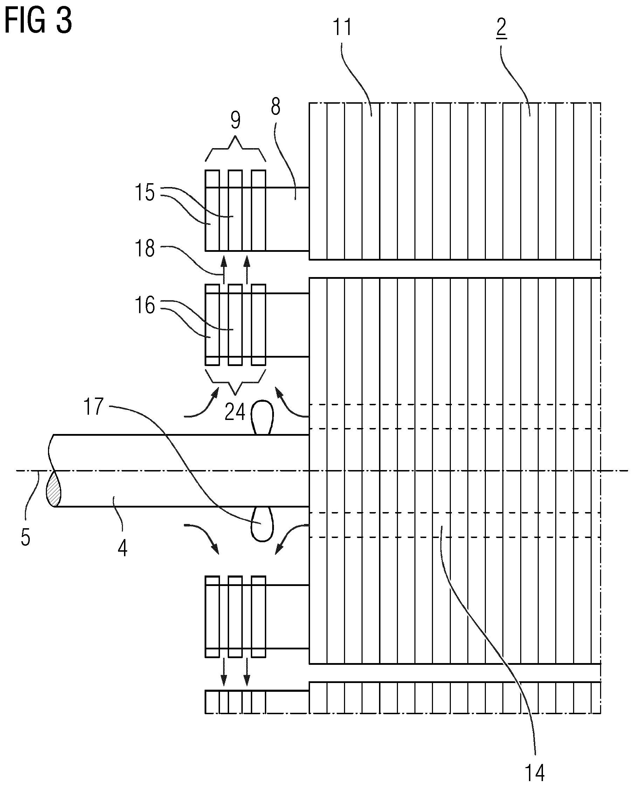

FIG 3 zeigt die andere Stirnseite des Stators 2, wobei sowohl der Kurzschlussring 9 des Stators 2 als auch der Kurzschlussring 24 des Rotors 3 aus Teilscheiben 15, 16 aufgebaut ist. Dies ermöglicht beispielsweise einer Luftströmung 18 radial zwischen die Teilscheiben 15, 16 der Kurzschlussringe 9, 24 von Stator 2 und Rotor 3 zu strömen und so aufgrund der größeren Oberflächen dieser Kurzschlussringe 9, 24 sowohl diese Kurzschlussringe 9, 24 als auch die dort vorhandenen Abschnitte der Leiterstäbe 8 effizient zu kühlen.

Der Luftstrom 18 kann dabei durch einen nicht näher dargestellten Fremdlüfter und/oder einen prinzipiell dargestellten Eigenlüfter 17 erzeugt werden, der drehfest mit der Welle 4 verbunden ist. Der radial geförderte Luftstrom 18 wird dabei u.a. axial über den Kühlkanal 14 bezogen, wobei damit auch das Blechpaket 12 des Rotors 3 gekühlt wird.

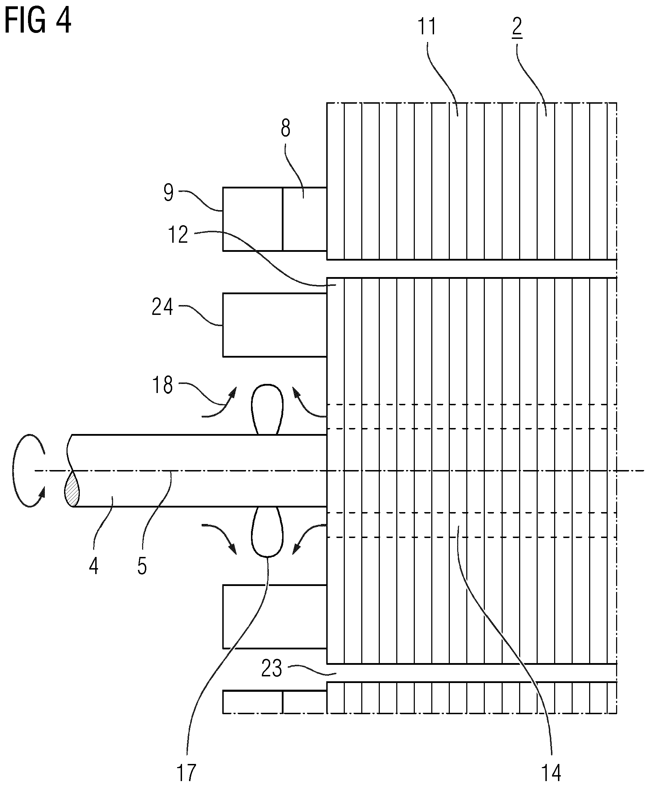

FIG 4 zeigt ebenfalls die andere Stirnseite des Stators 2, wobei dort nunmehr Kurzschlussring 9 des Stators 2 und Kurzschlussring 24 des Rotors 3 einstückig ausgeführt sind. Ein Luftstrom 18, der durch einen oder mehrere Eigenlüfter 17 und/oder einen oder mehrere Fremdlüfter nunmehr bereitgestellt wird, kann somit diese einstückigen Kurzschlussringe 9, 24 und die Abschnitte der Leiterstäbe 8 umströmen.

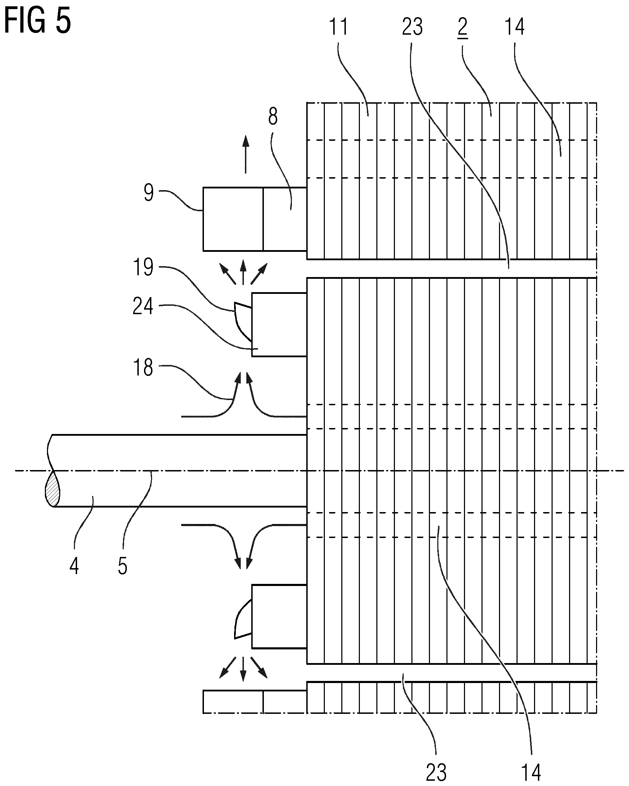

FIG 5 zeigt ebenfalls die andere Stirnseite des Stators 2, wobei im Gegensatz zur FIG 4 nunmehr der Kurzschlussring 24 des Rotors 3 an seiner Stirnseite Lüfterelemente 19 aufweist, die einen radialen Luftstrom Richtung Kurzschlussring 9 des Stators 2 generieren. Die Luft wird ebenfalls, wie in den Ausführungen gemäß FIG 3 und FIG 4, u.a. aus dem Kühlkanal 14 des Rotors 3 und der weiteren Umgebung bezogen.

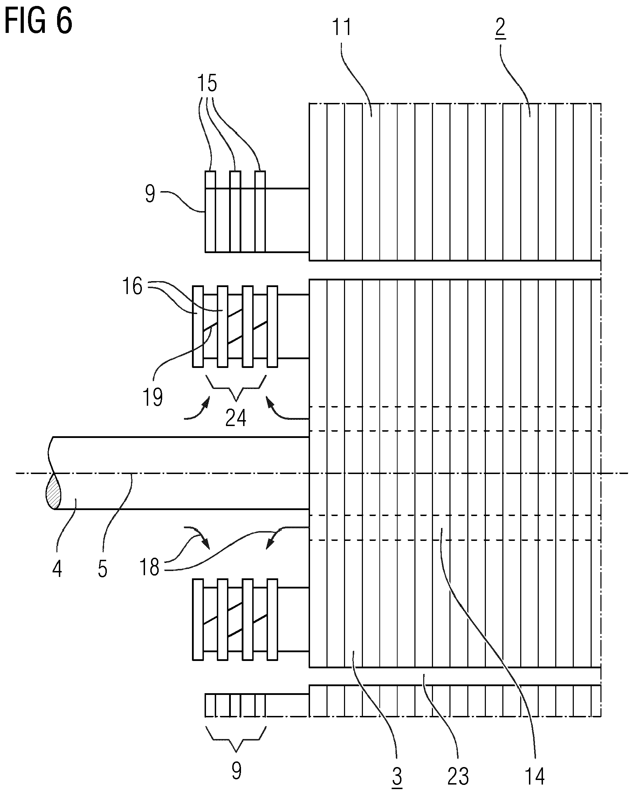

FIG 6 zeigt ebenfalls die andere Stirnseite des Stators 2, wobei nunmehr der Kurzschlussring 24 des Rotors 3 aus Teilscheiben 16 aufgebaut ist, die voneinander beabstandet und somit zwischen den Teilscheiben 16 des Kurzschlussringes 24 Lüfterelemente 19 aufweisen, die ebenfalls eine Eigenlüfter-Funktion generieren. Die Eigenlüfter-Funktion wird, sobald sich der Rotor 3 dreht, durch dementsprechende Eigenlüfter bzw. Lüfterelemente 19 bereitgestellt.

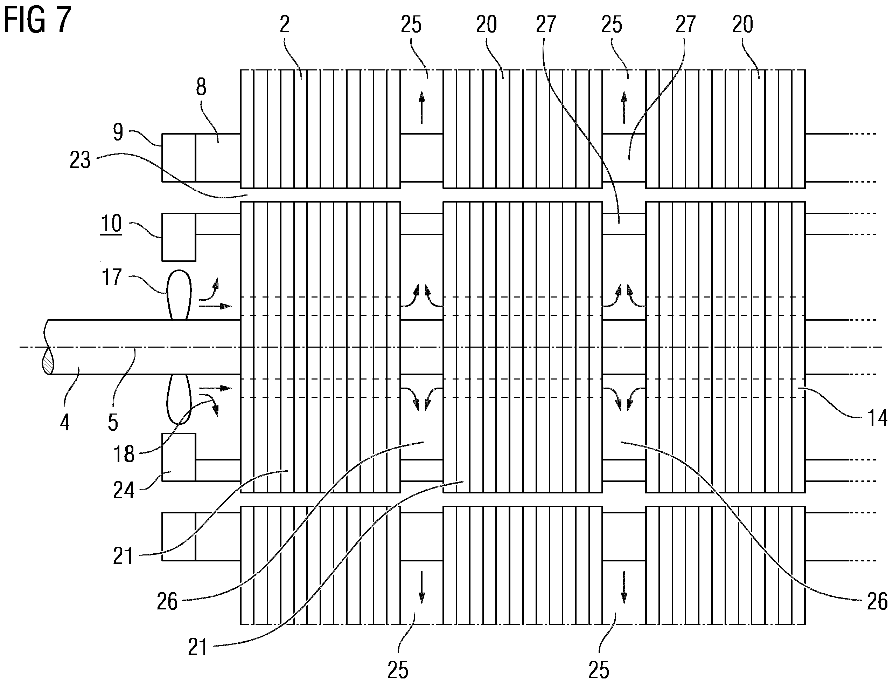

FIG 7 zeigt einen Ausschnitt der dynamoelektrischen Maschine 1 mit einer Stirnseite des Stators 2, wobei die Kurzschlussringe 9, 24 lediglich prinzipiell dargestellt sind. In dieser Ausführung ist das Blechpaket 11, 12 von Stator 2 und Rotor 3 in axial geschichtete Teilblechpakete 20, 21 unterteilt, wobei insbesondere Abstandshalter 27 des Rotors 3 als lüfterähnliche Elemente ausgebildet sind, die bei Drehung des Rotors 3 eine Eigenlüfter-Funktion generieren und somit unter anderem Kühlluft aus dem Kanal 14 zumindest zum Teil radial durch den Schlitz 26 des Rotors 3 und den Schlitz 25 des Stators 2 fördern. Kühlluft für die Schlitze 25 des Stators 2 kann auch über den Luftspalt 23 bereitgestellt werden.

Um eine verbesserte Kühlwirkung zu erzielen, können die Kurzschlussringe 9, 24 von Stator 2 und Rotor 3 axial versetzt angeordnet sein.

Auch ein axialer Abstand 30 zwischen den Wechselrichtermodulen 6 ermöglicht effiziente Luftkühlung.

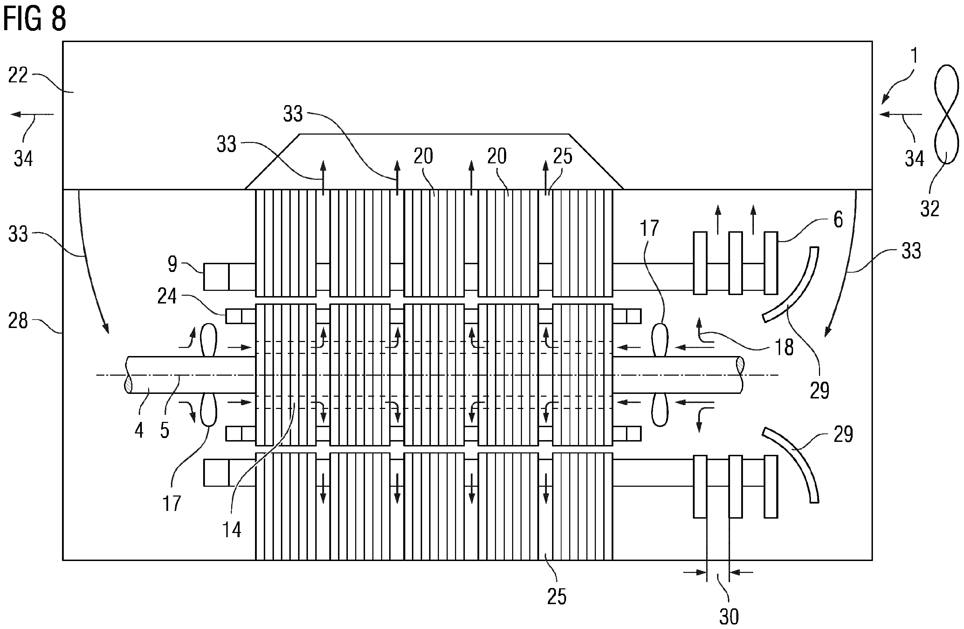

Die erfindungsgemäßen dynamoelektrischen rotatorischen Maschinen 1 weisen einen - wie bisher implizit beschriebenen - offenen Kühlkreislauf auf. Sie können in einer weiteren Ausführung gemäß FIG 8 auch einen geschlossenen Innenkühlkreislauf bzw. Primärkreislauf 33 aufweisen, der rückgekühlt wird.

Grundsätzlich kann die Kühlung dieses Antriebs, also der dynamoelektrischen Maschine 1, mit den Wechselrichtermodulen 6 offen ausgebildet sein (Wärmeaustausch mit der Umgebungsluft erfolgt, z.B. über Luftschlitze im Gehäuse der Maschine mittels Umgebungsluft) . Die Kühlung dieses Antriebs, also der dynamoelektrischen Maschine 1, mit den Wechselrichtermodulen 6 kann alternativ dazu auch über einen geschlossenen Innenkühlkreislauf (Primärkreislauf 33) innerhalb des Gehäuses 28 erfolgen, dabei erfolgt die Rückkühlung des Innenkühlkreislaufes (Primärkreislauf 33) durch eine Sekundärkühleinrichtung (Sekundärkühlkreislauf 34) .

FIG 8 zeigt einen geschlossenen Innenkühlkreislauf (Primärkreislauf 33) innerhalb des Gehäuses 28 mit einer Sekundärkühleinrichtung (Aufsatzkühler 22) zur Kühlung des Luftstromes des Primärkreislaufes 33.

Dabei kann der Aufsatzkühler 22 als Röhrenkühler oder Plattenkühler ausgeführt sein, wobei in diesem Fall eine primärseitige X-Belüftung des Antriebs (insbesondere dynamoelektrische Maschine 1, mit den Wechselrichtermodulen 6) vorliegt.

Als Primärkreislauf 33 wird unabhängig von ein- oder zweiseitiger Belüftung (Z- oder X-Belüftung) innerhalb der dynamoelektrischen Maschine 1 ein gasförmiger Kühlstrom, insbesondere ein Luftstrom bzw. eine Luftstromverteilung, bezeichnet, der Komponenten der dynamoelektrischen Maschine 1, wie Wechselrichtermodule 6, Kurzschlussringe 9, 24 von Stator 2 und/oder Rotor 3, magnetisch leitfähige Körper von Stator 2 und/oder Rotor 3,(z.B. Blechpakete 11, 12 oder Teilblechpakete 20, 21), Leiter 8, zumindest Gehäuseabschnitte, Lagerschilde 36 und Lager 35 anströmt und/oder umströmt und/oder durchströmt und als geschlossener Kreislauf (Innenkühlkreislauf bzw. Primärkreislauf 33) ausgeführt ist, der keinen strömungsmäßigen Kontakt nach außen hat. Der Luftstrom des Primärkreislaufes 33 wird durch einen oder mehrere Eigenlüfter 17 und/oder Fremdlüfter 32 drückend oder saugend innerhalb des Gehäuses 28 der dynamoelektrischen Maschine 1 generiert.

Als Sekundärkreislauf 34 wird ein Kühlstrom, Flüssigkeitskühlstrom (z.B. auf der Basis von Wasser) oder ein gasförmiger Kühlstrom (z.B. auf der Basis von Luft) in einem Aufsatzkühler 22 bezeichnet, der wärmetechnisch mit dem Kühlstrom des Primärkreislaufes 33 gekoppelt ist, ihn also rückkühlen kann, wobei der Kühlstrom bzw. eine Kühlstromverteilung, insbesondere Luft des Sekundärkreislaufes 34 durch Eigen- und/oder Fremdlüfter oder dementsprechende Pumpen, drückend oder saugend generiert wird.

Vorzugsweise ist der Sekundärkreislauf 34 offen ausgeführt, d.h. er wird mit Umgebungsluft betrieben, die Luft aus der Umgebung ansaugt, durch das Medium des Primärkreislaufs 33 erwärmt und anschließend an die Umgebung wieder abgegeben wird. Damit kann die dynamoelektrische Maschine 1, mit einem derartigen Aufsatzkühler 22 ausgestattet, an nahezu beliebigen Orten aufgestellt werden, ohne eine Verschmutzung des Inneren des Antriebs (dynamoelektrische Maschine 1, mit den Wechselrichtermodulen 6) zu befürchten. Es müssen lediglich die Wärmetauscher des Aufsatzkühlers 22 wie Röhren oder Platten gereinigt werden. Ergänzend sind ggf. vor den Eingang des Sekundärkreislaufs 34 Filtermatten oder Luftfilter für stark verschmutzte Luft vorzusehen.

Dabei kann sich jeder Luftstrom sowohl des Primärkreislaufes 33 als auch des Sekundärkreislaufes 34 zumindest abschnittsweise innerhalb seines Strömungsverlaufs in parallele Strömungspfade aufteilen, insbesondere während des Wärmeaustausches zwischen Primärkreislauf 33 und Sekundärkreislauf 34, was der Effizienz der Rückkühlung steigert.

Dies geschieht vorteilhafterweise durch Leitvorrichtungen in der dynamoelektrischen Maschine 1 und/oder in dem als Aufsatzkühler 22 ausgebildeten Sekundärkreislauf 34, um die Kühlwirkung der von Primärkreislauf 33 und/oder Sekundärkreislauf 34 zu optimieren.

Der Innenkühlkreislauf der dynamoelektrischen Maschine 1, mit den Wechselrichtermodulen 6 - also der Primärkreislauf 33 - kann als Z- oder X-Belüftung ausgelegt sein.

Als einseitige Belüftung (Z-Belüftung) des Innenkühlkreislaufs wird die Belüftung der dynamoelektrischen Maschine 1 bezeichnet, bei der ein Luftstrom (Primärkreislauf 33) auf einer Seite der dynamoelektrischen Maschine 1 in einen Wickelkopfraum eingespeist wird und danach über verschiedene parallele und/oder serielle Strömungskanäle - u.a. Wickelkopf, Rücken des Blechpakets 11 des Stators 2, radiale Kühlkanäle, Luftspalt 23, etc. - zu dem anderen Wickelkopfraum gelangt. Von dort gelangt die erwärmte Luft des Primärkreislaufes 33 über einen oder mehrere Lüfter - Eigenlüfter oder Fremdlüfter - angetrieben in den Aufsatzkühler 22 zur Rücckühlung.

Die Luft des Primärkreislaufes 33 wird somit über einen Wickelkopfraum in das Gehäuse 28 der dynamoelektrischen Maschine 1 geführt und dort u.a. über den Wickelkopf und die Blechpakete 11, 12 und/oder den Luftspalt 23 in den anderen Wickelkopfraum geführt. Von dort wird der nun dort ggf. weiter erwärmte Kühlluftstrom über den Aufsatzkühler 22, mittels des Sekundärkreislaufes 34 rückgekühlt.

Als zweiseitige Belüftung (X-Belüftung) des Innenkühlkreislaufs wird die Belüftung der dynamoelektrischen Maschine 1 bezeichnet, bei der ein Luftstrom (Primärkreislauf 33) auf beiden Seiten der dynamoelektrischen Maschine 1 in den jeweiligen Wickelkopfraum eingespeist wird und danach über verschiedene parallele und/oder serielle Strömungskanäle - u.a. Wickelkopf, Rücken des Blechpakets 11 des Stators 2, radiale Kühlkanäle 25, 26, Luftspalt 23, Schlitze 25, 26 etc. - im Wesentlichen mittig am Rücken des Statorblechpakets in den Aufsatzkühler 22 gelangt. Die erwärmte Luft des Primärkreislaufes 33 wird durch einen oder mehrere Lüfter - Eigenlüfter oder Fremdlüfter - in den Aufsatzkühler 22 zur Rückkühlung gefördert. Dementsprechende, insbesondere stellbare Blendenelemente, wie Düsenelemente 29 verbessern den Strömungsverlauf des Primärkreislaufes 33, indem besondere "hot-spots" (z.B. Wechselrichtermdule 6) innerhalb des Primärkreislaufes 33 gezielt strömungstechnisch angesteuert werden können.

Der Sekundärkreislauf 34 - also der Aufsatzkühler 22 - der dynamoelektrischen rotatorischen Maschine 1 kann als ein Röhrenkühler oder Plattenkühler vorgesehen ist, dessen Kühlmedium Luft oder Wasser ist. Derartige geschlossene Primärkühlkreisläufe 33 sind sekundärseitig am besten mit folgenden Aufsatzkühlern 22 umsetzbar (Luft-Luft-Kühlaggregate via Röhren- oder Plattenkühler; oder Luft- Flüssigkeits-Kühlaggregate via zumindest teilumfänglichem Mantel- oder Aufsatzkühler).

Der Aufsatzkühler 22 weist dabei nicht näher dargestellte Kanäle bzw. Strömungspfade von Primärkreislauf 33 und Sekundärkreislauf 34 auf. Er weist außerdem dementsprechende korrespondierende Öffnungen mit dem Gehäuse 28 auf, um die jeweiligen Kühlprinzipien zu realisieren.

Verstellbare Leitvorrichtungen wie Düsenelemente 29 oder Blendeelemente führen und/oder verzweigen den Luftstrom des Primärkreislaufes 33 innerhalb des Gehäuses 28 zu den jeweiligen Wärmequellen.

Auch im Sekundärkreislauf 34 können Leitvorrichtungen des Kühlluftstromes vorgesehen sein.

Ein derartiger Antrieb, also die dynamoelektrische Maschine 1, mit über Wechselrichtermodulen 6 separat ansteuerbaren Leiterstäben 8 eignet sich vor allem für industrielle Anlagen, wo stark wechselnde Betriebszustände erforderlich sind, und wo innerhalb kürzester Zeit regelungstechnische Reaktionen des Antriebs notwendig sind. (Anpassung eines magnetischen axialen oder radialen Zugs, Reaktion auf Schwingungen des Rotors, Drehzahlanpassungen, Redundanz der Maschine 1 bei Ausfall eines Leiterstabes 8 bzw. dessen Wechselrichtermodule 6 etc.).

## Patentansprüche

1. Dynamoelektrische rotatorische Maschine (1) mit
- einem Stator (2), der einen hohlzylindrischen magnetisch leitfähigen Körper, insbesondere ein axial geschichtetes Blechpaket (11) aufweist, das im Bereich seiner Innenmantelfläche Nuten (31) aufweist, die mit elektrischen Leitern (8) versehen sind,
- wobei diese elektrischen Leiter (8) auf einer Stirnseite des magnetisch leitfähigen Körpers des Stators durch zumindest einen Kurzschlussring (9) elektrisch kontaktiert sind,
- wobei diese elektrischen Leiter (8) auf der anderen Stirnseite des magnetisch leitfähigen Körpers mit einer Vielzahl von Wechselrichtermodulen (6) zur Ansteuerung der jeweiligen elektrischen Leiter (8) elektrisch kontaktiert sind,
- einem von dem Stator (2) durch einen Luftspalt (23) beabstandeten Rotor (3), der als Kurzschlussläufer ausgebildet ist und an seinen Stirnseiten Kurzschlussringe (24) aufweist,
- wobei die Leiter (8) und/oder die Wechselrichtermodule (6) und/oder der Rotor (3) und/oder der Kurzschlussring (9) des Stators (2) jeweils zumindest abschnittsweise mittels eines gasförmigen Mediums, insbesondere Luft kühlbar sind.

2. Dynamoelektrische rotatorische Maschine (1) nach Anspruch 1, **dadurch gekennzeichnet, dass** pro Nut (31) die elektrischen Leiter (8), als hohle Leiterstäbe oder als aus Teilleitern aufgebautem Leiterstab ausgeführt sind.

3. Dynamoelektrische rotatorische Maschine (1) nach Anspruch 1 oder 2, **dadurch gekennzeichnet, dass** der Kurzschlussring (9) des Stators (2) und/oder die Kurzschlussringe (24) des Rotors (3) aus axial voneinander beabstandeten Einzelringen (15,16) und/oder aus Ringsegmenten aufgebaut sind.

4. Dynamoelektrische rotatorische Maschine (1) nach Anspruch 3, **dadurch gekennzeichnet, dass** die Kurzschlussringe (24) des Rotors (3) Lüfterelemente (19) aufweisen, die der Erzeugung, eines insbesondere im Wesentlichen radialen Kühlluftstroms (18) dienen.

5. Dynamoelektrische rotatorische Maschine (1) nach Anspruch 4, **dadurch gekennzeichnet, dass** die Lüfterelemente (19) an den Kurzschlussringen (24) des Rotors (3) und/oder zwischen den axial unterteilten Einzelringen (16) eines Kurzschlussringes (24) des Rotors (3) angeordnet sind.

6. Dynamoelektrische rotatorische Maschine (1) nach einem der vorhergehenden Ansprüche, **dadurch gekennzeichnet , dass** der magnetisch leitfähige Körper, insbesondere die Blechpakete (11,12) axial unterteilt und voneinander beabstandet sind und so Teilblechpakete (20,21) von Stator (2) und/oder Rotor (3) bilden.

7. Dynamoelektrische rotatorische Maschine (1) nach einem der vorhergehenden Ansprüche, **dadurch gekennzeichnet , dass** zumindest ein Eigenlüfter (17) und/oder ein Fremdlüfter (32) vorgesehen ist.

8. Dynamoelektrische rotatorische Maschine (1) nach Anspruch 7, **dadurch gekennzeichnet , dass** der Eigenlüfter (17) drehfest mit einer den Rotor (3) tragenden Welle (4) verbunden ist und radial innerhalb der Kurzschlussringe (9, 24) von Stator (2) und/oder Rotor (3) angeordnet ist.

9. Dynamoelektrische rotatorische Maschine (1) nach einem der vorhergehenden Ansprüche, **dadurch gekennzeichnet , dass** Eigenlüfter (17) und/oder Fremdlüfter (32) radial unter den Wechselrichtermodulen (6) angeordnet ist.

10. Dynamoelektrische rotatorische Maschine (1) nach einem der vorhergehenden Ansprüche, **dadurch gekennzeichnet , dass** die Maschine (1) einen geschlossenen Innenkühlkreislauf bzw. Primärkreislauf (33) aufweist.

11. Dynamoelektrische rotatorische Maschine (1) nach Anspruch 10, **dadurch gekennzeichnet, dass** der Innenkühlkreislauf als Z- oder X-Belüftung ausgelegt ist.

12. Dynamoelektrische rotatorische Maschine (1) nach Anspruch 10 oder 11, **dadurch gekennzeichnet, dass** als Sekundärkreislauf (34) ein Röhrenkühler oder Plattenkühler vorgesehen ist, dessen Kühlmedium Luft oder Wasser ist.

13. Verfahren zur Kühlung einer dynamoelektrische rotatorische Maschine (1) mit
- einem Stator (2), der einen hohlzylindrischen magnetisch leitfähigen Körper, insbesondere ein axial geschichtetes Blechpaket (11) aufweist, das im Bereich seiner Innenmantelfläche Nuten (31) aufweist, die mit elektrischen Leitern (8) versehen sind,
- wobei diese elektrischen Leiter (8) auf einer Stirnseite des magnetisch leitfähigen Körpers des Stators durch zumindest einen Kurzschlussring (9) elektrisch kontaktiert sind,
- wobei diese elektrischen Leiter (8) auf der anderen Stirnseite des magnetisch leitfähigen Körpers mit einer Vielzahl von Wechselrichtermodulen (6) zur Ansteuerung der jeweiligen elektrischen Leiter (8) elektrisch kontaktiert sind,
- einem von dem Stator (2) durch einen Luftspalt (23) beabstandeten Rotor (3), der als Kurzschlussläufer ausgebildet ist und an seinen Stirnseiten Kurzschlussringe (24) aufweist,
- wobei die Leiter (8) und/oder die Wechselrichtermodule (6) und/oder der Rotor (3) und/oder der Kurzschlussring (9) des Stators (2) jeweils zumindest abschnittsweise mittels eines gasförmigen Mediums, insbesondere Luft gekühlt werden, indem über die Erfassung der Temperatur von Teilluftströmen eines Primärkreislaufes und/oder eines Sekundärkreislaufes, die lediglich thermisch gekoppelt sind, die Teilluftströme sowohl im Primärkreislaufes und/oder Sekundärkreislauf ihrem Verlauf und/oder ihrer Temperatur beeinflusst werden.

14. Verfahren zur Kühlung einer dynamoelektrischen rotatorischen Maschine (1) nach Anspruch 13, **dadurch gekennzeichnet , dass** die Temperatur und/oder der Kühlmengendurchsatz von Primärkreislauf (33) und/oder Sekundärkreislauf (34) mittels Sensoren und/oder Berechnungen ermittelt wird.

15. Verfahren zur Kühlung einer dynamoelektrischen rotatorischen Maschine (1) nach Anspruch 13 oder 14, **dadurch gekennzeichnet , dass** von einer übergeordneten Regelung zuschaltbare Fremdlüfter (32) und/oder einen Luftstrom beinflussbare Stellglieder dementsprechend angesteuert werden.
